# FASCICULE DE BREVET EUROPEEN

(11) **EP 2 830 946 B1**
(45) Date de publication et mention de la délivrance du brevet: **01.01.2020**
(21) Numéro de dépôt: 13719721.6
(22) Date de dépôt: 29.03.2013
(51) Int. Cl.: B64D 11/06, B60P 7/08

(54) **DISPOSITIF DE FIXATION D'UN ÉQUIPEMENT SUR UN PANNEAU**
VORRICHTUNG ZUR BEFESTIGUNG EINES VORRICHTUNG AUF EINER PLATTE
DEVICE FOR ATTACHING AN APPARATUS ONTO A PANEL

(30) Priorité: 30.03.2012 FR 1200966
(43) Date de publication de la demande: 04.02.2015
(73) Titulaire: SOGECLAIR SA, 31700 Blagnac (FR)
(72) Inventeur: DELOUBES, Mathieu, F-31530 Bretx (FR)
(74) Mandataire: Junca, Eric
(86) Numéro de dépôt international: PCT/EP2013/000958
(87) Numéro de publication internationale: WO 2013/143709

(56) Documents cités:
- DE-A1-102007 036 449
- FR-A2- 2 606 097
- US-A- 3 381 925
- US-A1- 2007 122 254
- US-B1- 6 585 465

## Description

### DOMAINE TECHNIQUE

L'invention concerne un dispositif de fixation d'un équipement sur un panneau - notamment sur un panneau de plancher d'un véhicule de transport -. En particulier, l'invention vise un tel dispositif de fixation amovible d'un équipement sur un panneau de plancher, par exemple d'aéronef. L'invention concerne en outre un procédé pour l'assemblage d'un équipement sur un panneau et un panneau comprenant un tel dispositif de fixation.

Un véhicule de transport comprend un espace intérieur, par exemple une cabine de passagers ou une soute de transport de fret. En particulier, un véhicule de transport de passagers - notamment un aéronef - comprend une cabine dans laquelle sont alignées plusieurs rangées de sièges pour passagers. Les sièges pour passagers et les meubles de cabine de l'aéronef sont fixés à des éléments de la structure primaire de l'aéronef par l'intermédiaire de rails s'étendant généralement parallèlement à l'axe de déplacement de l'aéronef.

En général, dans un aéronef, les rails reposent sur des traverses constituant la structure primaire de l'aéronef et s'étendant sensiblement parallèlement les unes aux autres et transversalement à l'axe longitudinal de l'aéronef. Ainsi, les rails du plancher, qui s'étendent parallèlement à l'axe longitudinal de l'aéronef, sont montés fixes sur la structure primaire de l'aéronef. Les rails permettent la fixation des éléments d'aménagement de la cabine, tels que, par exemple, des sièges, des offices (« galleys »), des meubles et/ou des marchandises embarquées.

### ETAT DE LA TECHNIQUE

On connait de FR 2 900 125 un plancher d'aéronef comportant une pluralité de rails latéraux et centraux parallèles entre eux et s'étendant longitudinalement dans un tronçon d'aéronef. Chaque rail est monté solidaire sur plusieurs traverses adjacentes de l'aéronef. Les rails sont fixés sur chacune des traverses de l'ossature structurelle de l'aéronef par l'intermédiaire de vis traversant des logements ménagés respectivement sur le rail et sur la traverse. Chaque rail forme une glissière longitudinale et comporte en outre deux brides latérales sensiblement planes et adaptées pour recevoir deux panneaux de plancher. Chaque panneau de plancher comprend une structure en général en nid d'abeille et est fixé, en général au moyen de vis et d'écrous, sur l'une des brides latérales planes du rail.

Un tel rail de fixation d'un équipement de cabine sur un plancher d'un aéronef occupe une position prédéterminée dans l'aéronef. Cette position prédéterminée est imposée par les dimensions des panneaux de plancher reposant sur rails de fixation.

De tels rails de fixation sont rigides, encombrants et ne permettent pas l'installation d'un plancher du véhicule de transport présentant une grande modularité. La position de tels rails de fixation doit en outre être prédéterminée de façon à pouvoir recevoir des panneaux de plancher qui sont généralement de forme rectangulaire.

Le document US6585465 montre un autre dispositif de fixation connu de l'état de la technique. Ce document divulgue un dispositif de fixation d'un équipement sur un rail, le dispositif de fixation présentant un axe longitudinal et comprenant:
- un organe de serrage comprenant un mors, dit mors de serrage, conformé pour pouvoir traverser la mortaise en translation selon l'axe longitudinal et pour pouvoir prendre appui sur la face opposée après rotation selon l'axe longitudinal et comprenant des moyens d'accrochage de l'équipement sur la face d'accrochage, et;
- une cheville d'ancrage du dispositif de fixation dans le panneau, solidaire en rotation de l'organe de serrage selon l'axe longitudinal du dispositif de fixation et comprenant un mors, dit mors d'ancrage, adapté pour pouvoir prendre appui sur la face d'accrochage; ledit organe de serrage étant adapté pour pouvoir être déplacé en translation par rapport à la cheville d'ancrage selon l'axe longitudinal entre:
- une position, dite position de blocage, du dispositif de fixation dans laquelle le mors de serrage et le mors d'ancrage sont rapprochés l'un de l'autre par des moyens élastiques de rappel et au contact des deux faces principales du panneau, et;
- une position, dite position d'installation, du dispositif de fixation dans laquelle le mors de serrage et le mors d'ancrage sont éloignés l'un de l'autre par rapport à la position de blocage de façon à permettre une rotation du dispositif de fixation selon l'axe longitudinal.

### EXPOSE DE L'INVENTION

L'invention vise à pallier l'ensemble des inconvénients précédemment évoqués.

En particulier, l'invention vise un dispositif de fixation d'un équipement sur un panneau - notamment sur un panneau de plancher d'un véhicule de transport - qui ne nécessite pas l'installation de rails pour la fixation de sièges et/ou de meubles.

L'invention vise aussi un tel dispositif de fixation d'un équipement sur un panneau qui est amovible et réutilisable après retrait pour la fixation ultérieure d'un équipement sur le même panneau ou sur un autre panneau.

En outre, l'invention vise un dispositif de fixation d'un équipement sur un panneau adapté pour pouvoir être utilisé sur un panneau dont l'une seule des deux faces principales est accessible - notamment aisément accessible -.

En particulier, l'invention vise un tel dispositif de fixation d'un équipement sur un panneau - notamment sur un panneau de plancher d'un véhicule de transport - permettant un aménagement facilité du plancher de véhicule de transport.

L'invention vise donc un dispositif de fixation d'un équipement sur un panneau qui est de forme quelconque.

L'invention vise aussi un tel dispositif de fixation d'un équipement sur un panneau - notamment sur un panneau de plancher d'un véhicule de transport - qui soit de masse réduite par rapport aux planchers comprenant des rails de fixation.

En outre, l'invention vise un tel dispositif de fixation d'un équipement sur un panneau - notamment sur un panneau de plancher d'un véhicule de transport - adapté pour pouvoir simplifier la construction et l'aménagement du plancher de véhicule de transport.

L'invention vise un tel dispositif de fixation d'un équipement sur un panneau pour plancher de véhicule de transport qui soit simple à poser dans un véhicule de transport et qui ne nécessite pas d'insérer ledit panneau de plancher dans l'intervalle séparant deux rails parallèles adjacents ni d'adapter les dimensions dudit panneau à la dimension de cet intervalle.

En particulier, l'invention vise un tel dispositif de fixation d'un équipement sur un panneau - notamment un panneau de plancher d'un aéronef - susceptible d'être fixé sur ledit panneau ultérieurement à la mise en place définitive du panneau.

L'invention vise donc un tel dispositif de fixation d'un équipement sur un panneau, - notamment sur un panneau de plancher pour un véhicule de transport - qui permette une plus grande modularité et un nombre accru de variantes dans l'aménagement de la cabine du véhicule de transport.

L'invention vise aussi un tel dispositif de fixation d'un équipement sur un panneau qui satisfait aux exigences de résistance mécanique, de résistance au feu, de réduction des émissions de fumée en cas d'incendie préconisées notamment dans le domaine aéronautique.

L'invention vise un tel dispositif de fixation d'un équipement sur un panneau adapté pour permettre une installation facilitée dans la cabine dudit véhicule de transport.

L'invention vise de surcroît à proposer un tel dispositif de fixation d'un équipement sur un panneau qui préserve les habitudes de travail des personnels, qui permette un montage et un démontage du dispositif de fixation d'un équipement sur un panneau qui soit facilité, et qui n'implique pour sa mise en oeuvre que peu de manipulations.

Pour ce faire, l'invention concerne un dispositif de fixation d'un équipement sur une face, dite face d'accrochage, principale d'un panneau comprenant au moins une mortaise traversant ledit panneau et débouchant sur ladite face d'accrochage et sur une face, dite face opposée, principale s'étendant à l'opposé de la face d'accrochage, le dispositif de fixation présentant un axe longitudinal et étant caractérisé en ce qu'il comprend :
- un organe de serrage comprenant un mors, dit mors de serrage, conformé pour pouvoir traverser la mortaise et pour pouvoir prendre appui sur la face opposée et comprenant des moyens d'accrochage de l'équipement sur la face d'accrochage, et ;
- une cheville d'ancrage du dispositif de fixation dans le panneau, solidaire en rotation de l'organe de serrage selon l'axe longitudinal du dispositif de fixation et comprenant un mors, dit mors d'ancrage, adapté pour pouvoir prendre appui sur la face d'accrochage ;
ledit organe de serrage étant adapté pour pouvoir être déplacé en translation par rapport à la cheville d'ancrage selon l'axe longitudinal entre :
- une position, dite position de blocage, du dispositif de fixation dans laquelle le mors de serrage et le mors d'ancrage sont rapprochés l'un de l'autre par des moyens élastiques de rappel et au contact des deux faces principales du panneau, et ;
- une position, dite position d'installation, du dispositif de fixation dans laquelle le mors de serrage et le mors d'ancrage sont éloignés l'un de l'autre par rapport à la position de blocage de façon à permettre une rotation du dispositif de fixation selon l'axe longitudinal.

Dans toute la suite :
- le terme « monobloc » désigne un panneau formé d'une seule pièce, c'est-à-dire qui ne peut pas être séparé en une pluralité d'éléments distincts et séparés sans rompre ni dégrader ledit panneau monobloc. En particulier, un tel panneau monobloc n'est pas démontable en une pluralité d'éléments séparables les uns des autres ;
- les termes « inférieur » et « supérieur » s'entendent vis-à-vis d'un panneau tel que positionné dans un véhicule de transport, la face principale supérieure dudit panneau monobloc orientée vers le haut, et la face principale inférieure orientée vers le bas. Ainsi, un panneau monobloc selon l'invention stocké en vue de son installation ultérieure pour former un plancher de véhicule de transport ou suite à son démontage à partir d'un plancher de véhicule de transport présente une face principale inférieure sur laquelle débouche ou s'étend au moins une poutre et une face principale supérieure ne présentant pas une telle poutre et adaptée pour permettre la circulation d'usagers du véhicule de transport ;
- les expressions « ossature structurelle » ou « structure primaire » d'un véhicule de transport - notamment d'un véhicule de transport par voie fluviale ou par voie maritime (par exemple un ferry, un paquebot ou un cargo), d'un véhicule de transport par voie de chemin de fer, d'un véhicule de transport par voie routière et d'un aéronef - représentent les éléments d'un véhicule de transport qui lui confèrent sa rigidité, sa tenue et sa forme ;
- le terme « autoportant » qualifie un plateau qui présente une rigidité en flexion suffisante et adaptée notamment pour pouvoir supporter son propre poids sans déformation, en particulier lorsque ledit plateau autoportant est en appui sur deux traverses sensiblement parallèles l'une à l'autre.

L'invention consiste donc à proposer un dispositif de fixation d'un équipement sur un panneau qui soit amovible et réutilisable.

Avantageusement, l'axe longitudinal du dispositif de fixation s'étend selon l'axe d'allongement du dispositif de fixation et selon l'axe de translation relative de la cheville d'ancrage - notamment du mors d'ancrage - et de l'organe de serrage - notamment du mors de serrage -.

Le dispositif de fixation présente dans sa position de blocage un mors de serrage s'étendant sur la face opposée du panneau et un mors d'ancrage s'étendant sur la face d'accrochage du panneau, lesdits mors de serrage et d'ancrage étant rappelés élastiquement l'un vers l'autre de façon à serrer le panneau et fixer le dispositif de fixation sur le panneau. Le dispositif de fixation présente dans sa position d'installation un mors de serrage orienté pour pouvoir être introduit dans la mortaise du panneau sur sa face d'accrochage, pour pouvoir traverser ledit panneau et pour pouvoir déboucher sur la face opposée du panneau, le mors d'ancrage étant maintenu sur la face d'accrochage du panneau.

Avantageusement, le mors de serrage du dispositif de fixation selon l'invention présente des moyens adaptés pour pouvoir maintenir ledit mors de serrage sur la face opposée du panneau lorsque le dispositif de fixation est en position de blocage et pour permettre un déplacement du mors de serrage en translation dans la mortaise du panneau lorsque le dispositif de fixation est en position d'installation, ledit mors de serrage et le mors d'ancrage étant maintenus solidaires en rotation.

Avantageusement, dans la position de blocage, le mors de serrage et le mors d'ancrage sont rappelés en rapprochement l'un par rapport à l'autre par des moyens élastiques de rappel et au contact des deux faces principales du panneau et coopèrent pour fixer le dispositif de fixation sur le panneau et pour permettre une fixation de l'équipement sur l'organe de serrage du dispositif de fixation.

On entend par équipement tout objet susceptible d'être fixé sur un panneau. Un dispositif de fixation selon l'invention est particulièrement avantageux pour fixer un équipement sur un panneau dont seule une face - la face d'accrochage - est accessible à l'utilisateur. En particulier, l'équipement peut être formé de tout meuble ou de tout siège présent dans un aéronef.

Avantageusement, dans une première variante selon l'invention, le mors de serrage est une pièce conformée pour présenter une forme adaptée pour pouvoir permettre un déplacement du mors de serrage en translation dans la mortaise du panneau lorsque le dispositif de fixation est en position d'installation et pour pouvoir bloquer le mors de serrage sur la face opposée du panneau lorsque le dispositif de fixation est en position de blocage, notamment après que le dispositif de fixation subisse une rotation autour d'un axe perpendiculaire aux faces principales du panneau et d'un angle de valeur non nulle à partir de sa position d'installation.

Avantageusement, l'organe de serrage est constitué d'un matériau métallique, notamment en titane.

Avantageusement, la cheville d'ancrage est constituée d'au moins un matériau choisi dans le groupe formé des matières polymériques - notamment des matériaux thermoplastiques - et des matériaux métalliques - notamment en aluminium -.

Avantageusement, le mors d'ancrage est formé d'une plaque, dite plaque de support d'ancrage, comportant des orifices traversant ladite plaque de support et adaptés pour permettre l'extraction du dispositif de fixation hors de la mortaise.

Avantageusement et selon l'invention, l'organe de serrage comprend une tige cylindrique traversant un alésage du mors d'ancrage et présentant une première extrémité longitudinale s'étendant en saillie de la cheville d'ancrage au moins dans la position de blocage du dispositif de fixation, ladite première extrémité longitudinale étant adaptée pour permettre la fixation dudit équipement sur le panneau, le mors de serrage étant solidaire de la tige cylindrique et s'étendant à une deuxième extrémité longitudinale de la tige cylindrique.

Dans un dispositif de fixation selon l'invention, l'organe de serrage est adapté pour pouvoir exercer un effort de serrage sur le panneau de part et d'autre d'une mortaise en coopération avec le mors d'ancrage de la cheville d'ancrage et pour pouvoir fixer un équipement à assembler avec ledit panneau ou à accrocher sur ledit panneau.

Dans un dispositif de fixation selon l'invention, la tige cylindrique de l'organe de serrage est une tige solide et rigide et adaptée pour pouvoir guider le déplacement de l'organe de serrage en translation par rapport à la cheville d'ancrage. La tige cylindrique est une tige rigide présentant, en section droite transversale, une forme quelconque. La section droite transversale de la tige cylindrique peut être de forme circulaire. Dans cette variante, les moyens de guidage permettent que la cheville d'ancrage et l'organe de serrage soient solidaires en rotation.

Il est possible que la tige cylindrique présente, sur au moins un tronçon de sa longueur, une section droite transversale de forme polygonale, notamment carrée. Dans cette variante, la tige cylindrique de l'organe de serrage permet que le mors de serrage de l'organe de serrage et le mors d'ancrage de la cheville d'ancrage soient solidaires en rotation.

Avantageusement et selon l'invention, l'alésage du mors d'ancrage est adapté pour recevoir la tige cylindrique de l'organe de serrage et pour permettre un déplacement de ladite tige cylindrique en translation dans l'alésage du mors d'ancrage entre la position de blocage et la position d'installation du dispositif de fixation. L'organe de serrage est donc guidé en translation dans l'alésage du mors d'ancrage entre la position de blocage et la position d'installation du dispositif de fixation.

Avantageusement et selon l'invention, la cheville d'ancrage comprend des moyens de guidage du mors de serrage en translation entre la position de blocage et la position d'installation du dispositif de fixation.

Avantageusement et selon l'invention, les moyens de guidage comprennent des tiges de guidage s'étendant entre le mors d'ancrage et un support de la cheville d'ancrage. La cheville d'ancrage comprend avantageusement un mors d'ancrage et des moyens de guidage formés de tiges rigides de guidage s'étendant solidaires entre le mors d'ancrage et le support de la cheville d'ancrage. Le support présente une forme adaptée pour pouvoir traverser la mortaise du panneau. En particulier, la forme du support ne s'étend pas au-delà de la forme en section droite transversale du mors de serrage.

Avantageusement et selon l'invention, les moyens élastiques comprennent au moins un ressort de compression s'étendant entre le support de la cheville d'ancrage et le mors de serrage de l'organe de serrage.

Le ressort de compression est adapté pour pouvoir rappeler en rapprochement le mors de serrage et le mors d'ancrage lorsque le dispositif est en position de blocage fixé sur un panneau ou en position de repos lorsque le dispositif de fixation n'est pas utilisé et pour permettre, en exerçant un effort sur l'organe de serrage, de placer le dispositif de fixation dans sa position d'installation et en vue de son installation.

Avantageusement et selon l'invention, la cheville d'ancrage comprend un détrompeur de guidage de la cheville d'ancrage dans la mortaise, s'étendant sur la face du mors d'ancrage, solidaire en rotation du mors d'ancrage et en regard du mors de serrage, ledit détrompeur présentant une lumière prolongeant co-axialement l'alésage du mors d'ancrage et adaptée pour recevoir la tige cylindrique de l'organe de serrage et permettre un déplacement de ladite tige cylindrique entre la position de blocage et la position d'installation du dispositif de fixation.

Avantageusement et selon l'invention, le mors d'ancrage est formé d'une plaque de support, dite plaque de support d'ancrage, d'appui sur la face d'accrochage du panneau lorsque le dispositif de fixation est en position de blocage et le détrompeur est de forme cylindrique et présente en section droite perpendiculaire à l'axe longitudinal du dispositif de fixation un contour extérieur inscrit dans une mortaise du panneau.

Avantageusement, l'enveloppe externe du détrompeur est de forme cylindrique. Cette enveloppe externe est en particulier conformée pour coopérer avec la surface interne de la mortaise du panneau et pour bloquer en rotation le dispositif de fixation dans ladite mortaise.

Avantageusement et selon l'invention, le détrompeur présente une enveloppe extérieure conformée pour pouvoir coopérer en déplacement dans la mortaise perpendiculairement aux faces principales du panneau et pour pouvoir bloquer le dispositif de fixation en rotation par rapport au panneau selon un axe perpendiculaire aux faces principales du panneau.

Avantageusement et selon l'invention, la première extrémité longitudinale de la tige cylindrique est une tige filetée. La tige filetée du dispositif de fixation selon l'invention s'étend, lorsque le dispositif de fixation est en position de blocage sur le panneau, du côté de la face d'accrochage dudit panneau. Elle permet donc la fixation, par exemple au moyen d'un écrou, d'un équipement de cabine d'aéronef, un siège ou tout autre équipement. Avantageusement et selon l'invention, la tige filetée d'un dispositif de fixation selon l'invention est adaptée pour permettre la fixation d'une chape de support d'un équipement. En variante, une telle chape de support d'un équipement est avantageusement fixée sur deux dispositifs de fixation selon l'invention en position de blocage dans deux mortaises. Avantageusement, les deux dispositifs de fixation sont portés par un seul panneau. Il est aussi possible que les deux dispositifs de fixation soient portés par deux panneaux adjacents, la chape de support d'un équipement contribuant à l'assemblage des deux panneaux adjacents.

Avantageusement et selon l'invention, le mors de serrage et le détrompeur présentent en section droite transversale par rapport à l'axe d'allongement du dispositif de fixation et sensiblement parallèle à un axe perpendiculaire aux deux faces principales du panneau un contour extérieur identique.

Dans cette variante avantageuse selon l'invention, le détrompeur et le mors de serrage sont décalés en rotation de façon que le détrompeur soit adapté pour pouvoir bloquer en rotation le dispositif de fixation dans la mortaise et que le mors de serrage soit décalé en rotation par rapport à la mortaise et exerce un effort de blocage du dispositif de fixation.

Avantageusement et selon l'invention, le mors de serrage et le détrompeur présentent en section droite transversale un contour extérieur quadrilobé Avantageusement, le détrompeur et le mors de serrage sont décalés en rotation d'un angle de valeur adaptée pour permettre le serrage et le blocage du dispositif de fixation sur le panneau. Cette valeur d'angle est non nulle et peut avantageusement être de l'ordre de 45°. Dans cette configuration, chaque lobe du mors de serrage est adapté pour pouvoir être en appui sur la face opposée du panneau, le dispositif de fixation étant alors en position de blocage.

Avantageusement et selon l'invention, le mors de serrage et le détrompeur présentent en projection sur un plan orthogonal à l'axe longitudinal de la tige cylindrique de leur section droite transversale un contour se déduisant l'un de l'autre par rotation d'un angle de valeur non nulle.

Avantageusement et selon l'invention, le panneau est un panneau pour plancher d'un véhicule de transport et comprend un plateau autoportant présentant une première face principale, dite face supérieure, du plateau autoportant adaptée pour pouvoir permettre la circulation d'un utilisateur sur le plancher dudit véhicule de transport.

Avantageusement et selon l'invention, le panneau est un panneau monobloc comprenant au moins une poutre d'augmentation de la résistance en flexion du panneau monobloc selon un axe principal dudit panneau monobloc, chaque poutre étant solidaire du plateau autoportant et présentant un axe d'allongement s'étendant parallèlement à au moins l'une des faces principales du plateau autoportant.

L'invention vise donc à proposer un dispositif de fixation d'un équipement sur un panneau monobloc de plancher d'un véhicule de transport, ledit panneau monobloc étant adapté pour pouvoir diminuer le poids du plancher tout en conservant des propriétés de résistance mécanique, notamment adaptées pour permettre l'utilisation d'un tel panneau monobloc dans un plancher de véhicule de transport.

Avantageusement, le plateau autoportant est formé d'un matériau, dit matériau d'âme, adapté pour présenter une résistance - en particulier sans déformation sensible - en compression qui est suffisante pour permettre la mise en place de meubles en appui sur au moins un panneau monobloc du plancher de véhicule de transport.

Avantageusement, le plateau autoportant est formé d'une âme en matériau thermoplastique transparent, notamment en polyméthacrylate de méthyle (PMMA), connu sous la dénomination Plexiglas®.

Avantageusement, la combinaison du plateau autoportant et de la(des) poutre(s) permet de former un panneau monobloc présentant en même temps une résistance à l'impact et un module d'élasticité en flexion qui sont élevés et adaptés pour permettre une utilisation comme plancher de véhicule de transport.

En outre, un tel panneau monobloc de résistance mécanique (résistance à l'impact et élasticité en flexion) améliorée présente néanmoins un encombrement - notamment une épaisseur - faible et en tout état de cause compatible avec les contraintes d'encombrement rencontrées dans une cabine d'aéronef. En particulier, un tel panneau monobloc permet l'utilisation d'une âme rigide d'épaisseur réduite. En particulier, un tel panneau monobloc est adapté pour pouvoir remédier à l'utilisation de rails de fixation de sièges de l'état de la technique.

En particulier, un tel panneau monobloc est adapté pour pouvoir être monté sur au moins un élément de l'ossature structurelle d'un aéronef sans nécessiter l'utilisation de rails de fixation de sièges et/ou de meubles.

Avantageusement, une pluralité de panneaux monobloc selon l'invention permet la réalisation d'un plancher de véhicule de transport qui est plan, tout en utilisant une pluralité de panneaux monobloc, chacun des plateaux autoportant de la pluralité de panneaux monobloc présentant une épaisseur différente et une résistance mécanique différente. Un panneau monobloc selon l'invention constitue un élément modulable de plancher de véhicule de transport en ce qu'il permet une adaptation des propriétés mécaniques dudit panneau monobloc, sans modifier l'épaisseur du panneau monobloc. Un tel panneau monobloc permet un aménagement modulable du volume intérieur du véhicule de transport.

Avantageusement et selon l'invention, le plateau autoportant comprend une âme - notamment une âme en nid d'abeille -, une peau, dite peau de cabine, s'étendant en surface et solidaire d'une première face principale de l'âme, en particulier de l'âme en nid d'abeille, - notamment adaptée pour pouvoir permettre la circulation d'un utilisateur sur le plancher dudit véhicule de transport - et des moyens d'assemblage - notamment par collage - de la peau de cabine et de l'âme - notamment de l'âme en nid d'abeille -.

Avantageusement et selon l'invention, le plateau autoportant comprend une peau, dite peau inférieure, s'étendant en surface et solidaire d'une deuxième face principale de l'âme - notamment de l'âme en nid d'abeille - et des moyens d'assemblage - notamment par collage - de la peau inférieure et de l'âme - notamment de l'âme en nid d'abeille -.

Avantageusement, dans un panneau monobloc selon l'invention, la peau de cabine et/ou la peau inférieure est (sont) formées d'un matériau rigide. En particulier, le matériau rigide formant la peau de cabine est adapté pour permettre la circulation d'un utilisateur sur le plancher dudit véhicule de transport.

Avantageusement, dans un panneau monobloc selon l'invention, la peau de cabine est formée d'un matériau choisi dans le groupe formé des matériaux métalliques (par exemple d'aluminium ou d'acier), des matériaux composites comprenant une charge - notamment une nappe unidirectionnelle ou un tissu - choisie dans le groupe formé des charges de carbone, des charges de verre, des charges d'aramide (polyamides aromatiques), des charges en fibres naturelles - notamment fibres de bambou - et d'une résine choisie dans le groupe formé des résines thermoplastiques, par exemple des résines du type polyéther imide (PEI), des résines du type polyéther imide ultra dense, des résines du type polypropylène sulfone (PPS), des résines du type polyétheréthercétone (PEEK) et des résines thermodurcissable, par exemple des résines époxy et des résines phénoliques. En particulier, une telle peau de cabine confère une bonne résistance mécanique et un poids réduit.

Avantageusement, la peau de cabine et la peau inférieure sont formées du même matériau.

Avantageusement, la peau de cabine est une peau rigide en elle - même (plaque), et est adaptée pour pouvoir subir une déformation élastique - notamment en flexion - acceptable. La peau de cabine peut cependant présenter en elle-même une certaine souplesse, notamment en déformation élastique en flexion dans la grande dimension de la peau. Dans ce cas, l'assemblage de la peau de cabine et de l'âme rigide confère sa rigidité au panneau monobloc de plancher.

Avantageusement, le plateau autoportant comprend au moins un matériau d'âme choisi dans le groupe formé d'une âme en nid d'abeille, d'une mousse, d'un treillis, d'une âme tissée et d'une âme non tissée.

Avantageusement, le plateau autoportant peut être formée d'une âme en nid d'abeille. Avantageusement, l'âme en nid d'abeille peut être formée de tout matériau rigide approprié, notamment d'un matériau choisi dans le groupe formé de l'aluminium, des alliages de l'aluminium, du poly-para-phénylène téréphtalamide (connu notamment sous la dénomination Kevlar®), d'une matière thermoplastique - notamment le polypropylène partiellement réticulé ou non - le PVC, le polycarbonate. Avantageusement, le matériau constituant l'âme en nid d'abeille peut être un matériau ayant subi un traitement de surface, de façon à le rendre imperméable aux gaz et/ou aux liquides.

Avantageusement, l'âme en nid d'abeille peut être constituée d'un assemblage de matériaux. Avantageusement, l'âme en nid d'abeille peut être formée d'une structure rigide, aussi appelée squelette, périphérique et d'alvéoles (ou corps creux, cavités ou pores). Dans ce mode particulier de réalisation, les alvéoles ouvertes forment un écarteur empêchant la déformation de la peau de cabine sous le poids des passagers ou des meubles.

Avantageusement, l'âme en nid d'abeille est constituée d'un matériau présentant des cavités ou pores traversant l'épaisseur de l'âme en nid d'abeille et débouchant sur les deux faces principales de l'âme en nid d'abeille.

Avantageusement, le plateau autoportant peut être constitué d'une mousse solide choisie dans le groupe formé des mousses à pores ouverts et des mousses à pores fermés. Avantageusement, on choisit la mousse solide dans le groupe formé des mousses de polyuréthane, des mousses d'aluminium, des mousses de carbone, des mousses thermodurcissables, des mousses thermoplastiques et des mousses de balsa.

Avantageusement, le plateau autoportant est choisi dans le groupe formé des âmes rigides en nid d'abeille, des âmes rigides en mousse rigide et des âmes rigides constituées d'une pluralité d'éléments en mousse rigide.

Avantageusement, le plateau autoportant peut être constitué d'une pluralité d'éléments en mousse rigide, lesdits éléments en mousse rigide étant collés les uns aux autres de façon à former l'âme rigide du panneau monobloc. Avantageusement, chacun des éléments en mousse rigide étant de forme allongée et présentant en section droite transversale en forme de trapèze, lesdits éléments en mousse rigide sont associés les uns aux autres de façon à former le plateau autoportant.

Avantageusement, la poutre est constituée d'un matériau solide choisi dans le groupe formé des matériaux métalliques, des matériaux thermodurcissables et des matériaux thermoplastiques. En particulier, la poutre est constituée d'un matériau solide thermodurcissable comprenant une résine époxyde résistante au feu et ne générant pas de fumée lors de sa combustion éventuelle.

Avantageusement, le plateau autoportant et la poutre sont associés l'un avec l'autre par collage entre le plateau autoportant et la poutre. Il est aussi possible que le plateau autoportant et la poutre soient associés l'un à l'autre par collage entre une peau, dite peau inférieure, s'étendant en surface inférieure du plateau autoportant - notamment de l'âme en nid d'abeille - et la poutre.

Avantageusement, le panneau monobloc comprend, remplissant au moins partiellement au moins une alvéole de l'âme en nid d'abeille, une quantité d'un matériau de renfort choisi dans le groupe formé des résines thermodurcissables - notamment des résines époxydes, des résines phénoliques et des mousses -. En particulier, un tel panneau monobloc comprend un tel matériau de renfort remplissant les alvéoles de l'âme en nid d'abeille s'étendant en regard d'au moins un tronçon de poutre dudit panneau monobloc, ladite quantité de matériau thermodurcissable étant adaptée pour permettre un renforcement de la résistance mécanique du panneau monobloc.

Avantageusement et selon l'invention, la poutre s'étend en saillie et au contact de l'une des deux faces principales du plateau autoportant - notamment de l'âme en nid d'abeille -.

Dans un panneau monobloc selon l'invention, la poutre s'étend en saillie en surface et au contact de l'une des deux faces principales du plateau autoportant - notamment formé d'une âme en nid d'abeille -. Cependant, il est aussi possible que la poutre s'étende inséré au moins partiellement dans l'épaisseur du plateau autoportant du panneau monobloc. Avantageusement, la poutre s'étend insérée totalement dans l'épaisseur du plateau autoportant du panneau monobloc.

Avantageusement et selon l'invention, la poutre s'étend au contact d'une deuxième face, dite face inférieure, principale opposée à la face supérieure du plateau autoportant.

Dans un panneau monobloc selon l'invention, la(les) poutre(s) s'étende(nt) sur la face du plateau autoportant opposée à la face supérieure du panneau monobloc, ladite face supérieure du plateau autoportant étant plane et adaptée pour permettre la circulation d'un utilisateur sur le plancher dudit véhicule de transport. Dans un panneau monobloc selon l'invention, les poutres n'entravent pas la circulation des passagers, mais permettent une amélioration de la résistance en flexion du panneau monobloc.

Avantageusement et selon l'invention, la poutre présente au moins un tronçon creux et présentant en section droite transversale une forme polygonale. Avantageusement, au moins l'une des poutre(s) présente(nt) au moins un tronçon creux et présentant en section droite transversale une forme polygonale. Avantageusement, chaque poutre présente au moins un tronçon creux et présentant en section droite transversale une forme trapézoïdale. Avantageusement, la section droite transversale de chaque tronçon creux de la poutre présente une section droite transversale de forme trapézoïdale. On parle alors de poutre en « oméga ».

Avantageusement, la poutre peut présenter en section droite transversale une forme complexe. En particulier, la poutre peut présenter des extensions latérales planes s'étendant sensiblement dans le même plan que la paroi adhérente et à partir de ladite paroi adhérente. Dans cette configuration, chaque poutre présente une surface de contact avec le plateau autoportant dont l'aire est augmentée.

Avantageusement et selon l'invention, la poutre présente au moins un tronçon creux et présentant une section droite transversale de forme polygonale, ledit tronçon creux s'étendant à au moins l'une des extrémités longitudinales de ladite poutre.

Avantageusement et selon l'invention, la poutre est en forme de profilé. Avantageusement, la poutre présente une section droite transversale de forme identique - notamment polygonale, en particulier trapézoïdale - sur la totalité de sa longueur. Avantageusement, chaque tronçon creux de la poutre s'étend à chaque extrémité de la poutre et en périphérie du panneau monobloc selon l'invention.

Avantageusement, la poutre est formée d'un élément de la pluralité d'éléments en mousse rigide constituants l'âme rigide.

Avantageusement et dans une première variante selon l'invention, chaque tronçon creux s'étendant en périphérie du panneau monobloc présente une section droite transversale de forme trapézoïdale et présente une paroi, dite paroi adhérente, sensiblement plane et s'étendant en regard et en contact avec l'âme rigide - notamment en nid d'abeille - et une paroi, dite paroi libre, opposée à la paroi adhérente sensiblement plane et parallèle à la paroi adhérente.

Dans cette première variante selon l'invention, chaque poutre du panneau monobloc comprend à chacune de ses extrémités un tronçon creux présentant deux parois opposées sensiblement parallèles et ménageant une cavité d'appariement de deux panneaux monobloc adjacents et de fixation des panneaux monobloc sur un élément d'ossature structurelle du véhicule de transport.

Avantageusement et selon l'invention, chaque tronçon creux forme un logement adapté pour pouvoir recevoir et coopérer avec un organe bi-fonctionnel de fixation d'au moins un panneau monobloc avec un élément - notamment une traverse - de l'ossature structurelle du véhicule de transport. Un tel organe bi-fonctionnel de fixation s'étend sur une poutre unique contrairement aux rails de fixation de sièges de l'état de la technique qui s'étendent sur une pluralité de poutres adjacentes. Le montage d'un panneau monobloc selon l'invention au moyen d'un tel organe bi-fonctionnel de fixation est donc simplifié.

Avantageusement, il est possible, dans un plancher de véhicule de transport formé de panneaux monobloc selon l'invention que certains de ces organes bi-fonctionnels de fixation soient adaptés pour permettre la fixation d'un seul panneau monobloc avec l'ossature structurelle du véhicule de transport, notamment la fixation de panneaux s'étendant en périphérie du plancher du véhicule de transport.

Avantageusement, la poutre comprend une face libre présentant en section droite transversale une forme choisie dans le groupe formé des formes concaves, des formes convexes et des formes planes.

Avantageusement, chaque tronçon creux forme un logement adapté pour pouvoir recevoir et coopérer avec un organe bi-fonctionnel de fixation de deux panneaux monobloc adjacents l'un avec l'autre et de solidarisation des deux panneaux monobloc adjacents avec un élément - notamment avec une traverse d'un aéronef ou d'un bateau - de l'ossature structurelle du véhicule de transport.

Avantageusement, dans un mode de réalisation particulier d'un panneau monobloc selon l'invention, chaque tronçon creux de section droite transversale de forme trapézoïdale présente une paroi libre au moins partiellement évidée. Dans ce mode de réalisation particulier, avantageusement et selon l'invention, chaque logement ménagé dans le tronçon creux et présentant une paroi opposée au moins partiellement évidée est adapté pour pouvoir recevoir au moins une partie d'un organe bi-fonctionnel de fixation de deux panneaux monobloc adjacents l'un avec l'autre et de solidarisation des deux panneaux monobloc adjacents avec un élément d'ossature structurelle du véhicule de transport - notamment avec une traverse d'un aéronef -.

Avantageusement, un panneau monobloc selon l'invention comprend au moins un tronçon creux de section droite transversale de forme trapézoïdale présentant une paroi libre au moins partiellement évidée, ledit tronçon creux étant adapté pour pouvoir recevoir un organe bi-fonctionnel de fixation des d'un panneau monobloc avec un élément d'ossature structurelle du véhicule de transport.

À noter que la mise en place d'un panneau monobloc selon l'invention sur les éléments transversaux de l'ossature structurelle du véhicule de transport est aisée et nécessite uniquement l'adaptation du logement ménagé dans le tronçon creux avec l'organe bi-fonctionnel de fixation et la fixation du panneau monobloc sur l'organe bi-fonctionnel de fixation et éventuellement la fixation de l'organe bi-fonctionnel avec l'élément d'ossature structurelle du véhicule de transport.

Avantageusement et selon l'invention, chaque poutre est creuse et présente un espace intérieur limité par la paroi adhérente et par la paroi libre.

Avantageusement et selon l'invention, le panneau monobloc présente une pluralité de mortaises traversant la peau de cabine, l'âme rigide - notamment en nid d'abeille - et la paroi adhérente de la poutre, chaque mortaise débouchant d'une part sur un demi-espace, dit espace supérieur, s'étendant vers l'extérieur et en regard de la peau de cabine et d'autre part sur l'espace intérieur de la poutre. Avantageusement, la poutre est une poutre creuse ménageant un espace intérieur communiquant avec la pluralité de mortaises du panneau monobloc.

Avantageusement et selon l'invention, chaque mortaise est adaptée pour pouvoir recevoir et coopérer avec un tenon de fixation d'un organe de fixation - notamment d'un organe de fixation formant une chape de fixation - d'un meuble du véhicule de transport - notamment d'un siège d'aéronef -, ledit organe de fixation étant adapté pour pouvoir coopérer avec le meuble du véhicule de transport et à immobiliser celui-ci sur le plancher du véhicule de transport.

Dans un mode de réalisation particulier d'un panneau monobloc selon l'invention, chaque mortaise du panneau monobloc est conformée pour pouvoir recevoir un tenon de fixation, ledit tenon de fixation comprenant un organe de verrouillage conformé pour que :
- dans une première position du tenon de fixation et de l'organe de verrouillage, ledit tenon de fixation puisse être introduit librement dans la mortaise, et pour que ;
- dans une deuxième position du tenon de fixation et de l'organe de verrouillage, distincte de la première position, l'organe de verrouillage soit maintenu dans la mortaise et que l'organe de fixation du meuble du véhicule de transport soit maintenu solidaire du panneau monobloc.

Avantageusement et selon l'invention, les mortaises de la pluralité de mortaises sont réparties régulièrement dans le plan principal du panneau monobloc en au moins un groupe de mortaise, les mortaises de chacun des groupes de mortaise étant alignées en regard de chaque poutre. Chacune des mortaises peut présenter en section droite transversale une forme particulière, notamment une forme polygonale, une forme circulaire, une forme ovoïde ou toute autre forme. En particulier, chacune des mortaises peut présenter en section droite transversale une forme quadrifide, par exemple une forme de base circulaire et présentant quatre excroissances présentant deux à deux un axe de symétrie perpendiculaire aux deux faces principales du panneau.

Par ailleurs, avantageusement et selon l'invention, le panneau monobloc comprend au moins un élément secondaire de raidissement s'étendant entre deux poutres consécutives du panneau monobloc, perpendiculairement à ceux-ci et au contact de la face inférieure du plateau autoportant. Avantageusement, le panneau monobloc selon l'invention comprend de tels éléments secondaires de raidissement adaptés pour augmenter la résistance mécanique du panneau monobloc - notamment pour une utilisation du panneau monobloc dans laquelle ledit panneau monobloc supporte des meubles.

Avantageusement et selon l'invention, l'organe de fixation est conformé pour pouvoir former une liaison solidaire avec un meuble - notamment un siège - du véhicule de transport et pour pouvoir recevoir une extrémité en forme de vis du tenon de fixation et pour solidariser l'organe de fixation avec le panneau monobloc au moyen d'un écrou.

Par ailleurs, avantageusement et selon l'invention, l'organe bi-fonctionnel comprend :
- une semelle adaptée pour pouvoir reposer sur et être solidarisée avec un élément de l'ossature structurelle du véhicule de transport, et ;
- une partie en saillie sur la semelle adaptée pour coopérer avec le tronçon creux de section droite transversale de forme polygonale à l'extrémité longitudinale de ladite poutre de façon à immobiliser sensiblement ledit panneau monobloc lorsque la partie en saillie de l'organe bi-fonctionnel coopère avec ledit tronçon creux.

Également, avantageusement et selon l'invention, le panneau monobloc présente au moins l'une des caractéristiques suivantes :
- le panneau monobloc présente une épaisseur totale comprise entre 7 mm et 40 mm ;
- le panneau monobloc présente une plus grande dimension, dite longueur, comprise entre 1000 mm et 3000 mm et une largeur comprise entre 500 mm et 1500 mm ;
- le panneau monobloc présente une masse relative comprise entre 4 kg/m² et 20 kg/m².

L'invention s'étend en aussi à un procédé de fixation d'un équipement sur un panneau comprenant deux faces principales et au moins une mortaise traversant ledit panneau et débouchant sur les deux faces principales dudit panneau, dans lequel on utilise un dispositif selon l'invention.

Avantageusement et selon l'invention, dans un tel procédé :
- on exerce un effort sur le dispositif de fixation de façon à placer ledit dispositif de fixation dans sa position d'installation dans laquelle le mors de serrage et le mors d'ancrage sont éloignés par rapport à la position de blocage et dans laquelle le mors de serrage est conformé de façon à pouvoir traverser la mortaise du panneau, puis ;
- on introduit ledit dispositif de fixation dans sa position d'installation dans l'une des mortaises du panneau de façon que le mors de serrage s'étende en regard de la face opposée du panneau, que le mors d'ancrage s'étende en regard de la face d'accrochage du panneau, puis ;
- on réalise une rotation du dispositif de fixation selon son axe longitudinal, puis ;
- on relâche l'effort de façon que le mors de serrage et le mors d'ancrage soient rappelés élastiquement en rapprochement l'un par rapport à l'autre par des moyens élastiques et que le panneau et le dispositif de fixation soient assemblés, et ;
- on assemble l'organe de serrage avec l'équipement par des moyens de fixation.

L'invention concerne également un dispositif de fixation et un procédé de fixation d'un équipement sur un panneau, un panneau comprenant un tel dispositif de fixation caractérisés en combinaison par tout ou partie des caractéristiques mentionnées ci-dessus ou ci-après.

### BREVE DESCRIPTION DES FIGURES

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs, et dans lesquelles :
- la figure 1 est une représentation schématique d'un dispositif de fixation selon l'invention en position de blocage,
- la figure 2 est une représentation schématique d'un dispositif de fixation selon l'invention en position d'installation,
- la figure 3 est une représentation schématique d'un dispositif de fixation selon l'invention en position de blocage et de fixation d'un équipement sur un panneau,
- la figure 4 une vue en coupe d'un panneau monobloc dans un plan perpendiculaire au panneau monobloc et passant par une poutre dudit panneau et comprenant un dispositif de fixation d'un équipement en position de blocage
- la figure 5 est une vue générale en perspective d'un panneau monobloc susceptible de recevoir un dispositif de fixation selon l'invention,
- la figure 6 est une vue en perspective par-dessous et avec un arraché d'un détail d'un panneau monobloc susceptible de recevoir un dispositif de fixation selon l'invention,
- la figure 7 est une vue en perspective par-dessus d'un détail d'un panneau monobloc susceptible de recevoir un dispositif de fixation selon l'invention,
- la figure 8 est une vue d'un détail d'un panneau monobloc en combinaison avec un dispositif de fixation de siège et/ou de meuble selon l'invention.

### DESCRIPTION DETAILLEE

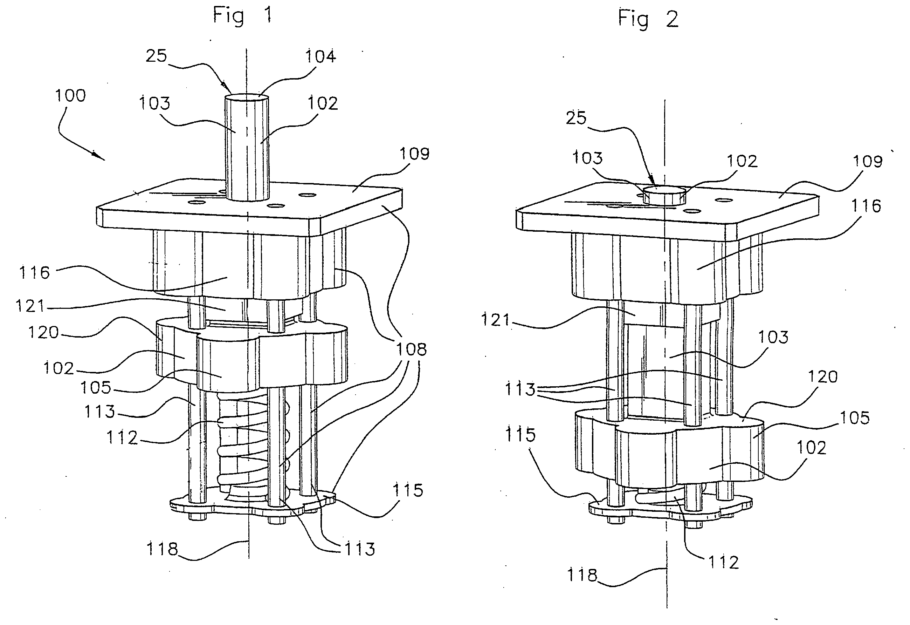

Un dispositif 100 de fixation d'un équipement sur un panneau est représenté en figure 1 en position de blocage. Un tel dispositif 100 de fixation comprend un axe 118 d'allongement sensiblement parallèle à un axe perpendiculaire aux deux faces principales d'un panneau 1 recevant ledit dispositif 100 de fixation. Le dispositif 100 de fixation est formé d'une cheville 108 d'ancrage du dispositif 100 de fixation dans le panneau, ladite cheville 108 d'ancrage comprenant un mors 109 d'ancrage, une plaque de support 115 d'ancrage et des moyens 113 de guidage d'un mors 102 de serrage, la cheville 108 d'ancrage, la plaque de support 115 d'ancrage et les moyens 113 de guidage étant solidaires les uns des autres. Dans le dispositif 100 de fixation représenté en figure 1, les moyens 113 de guidage sont formés de tiges 113 de guidage s'étendant parallèlement les uns aux autres entre le mors 109 d'ancrage et une plaque de support 115 d'ancrage de la cheville 108 d'ancrage. Le cas échéant, comme représenté en figure 1, la cheville 108 d'ancrage présente un détrompeur 116 adapté pour pouvoir coopérer avec les parois d'une mortaise d'un panneau et pour immobiliser la cheville 108 d'ancrage et le dispositif 100 de fixation en rotation sur le panneau.

La plaque de support 115 d'ancrage du mors 109 d'ancrage présente au moins un orifice de préhension et d'extraction du dispositif 100 de fixation hors du panneau. En particulier, de tels orifices sont conformés pour pouvoir recevoir un outil de préhension du dispositif 100 de fixation en vue de son extraction. Ainsi, un dispositif 100 de fixation selon l'invention est un dispositif 100 de fixation qui est amovible et réutilisable.

La cheville 108 d'ancrage représentée en figure 1 comprend un corps détrompeur 116 solidaire du mors 109 d'ancrage et de la plaque de support 115 d'ancrage via les tiges 113 de guidage. Le détrompeur présente une lumière adaptée pour recevoir et permettre le déplacement en translation de la tige 103 cylindrique.

L'organe 102 de serrage du dispositif 100 de fixation est formé d'un mors 105 de serrage de section droite transversale de forme sensiblement quadrilobée et d'une tige 103 cylindrique s'étendant selon l'axe 118 d'allongement du dispositif 100 de fixation et solidaire du mors 105 de serrage. La tige 103 cylindrique est adaptée pour permettre un déplacement de l'organe 102 de serrage en translation par rapport à la cheville 108 d'ancrage dans la lumière du détrompeur 116 et du mors 109 d'ancrage. Dans la variante représentée en figure 1, la tige 103 cylindrique présente une section 121 droite transversale de forme carrée et la lumière 117 du détrompeur 116 présente aussi une section droite transversale de forme carrée complémentaire de façon à permettre le déplacement de la tige 103 cylindrique en translation dans la lumière 117 du détrompeur 116. Dans cette variante, la tige 103 cylindrique de l'organe 102 de serrage et le détrompeur 116 solidaire de la plaque de support 115 d'ancrage sont solidaires en rotation l'un par rapport à l'autre.

La tige 103 cylindrique comprend une extrémité 25 terminale adaptée pour recevoir et accrocher un équipement, notamment un étrier de fixation d'un tel équipement. Une telle extrémité 25 terminale peut comprendre des moyens d'accrochage formés d'un tronçon de tige filetée adaptée pour recevoir un écrou d'accrochage.

Le dispositif 100 de fixation représenté en figure 1 comprend des moyens 112 élastiques de rappel du mors 105 de serrage et du mors 109 d'ancrage l'un vers l'autre. Dans la position de blocage du dispositif 100 de fixation représenté en figure 1 le mors de serrage et le mors 109 d'ancrage sont en position rapprochée l'un de l'autre.

Un dispositif 100 de fixation en position d'installation est représenté en figure 2. Un dispositif 100 de fixation en position d'installation est obtenu en exerçant un effort en compression sur l'organe 102 de serrage du dispositif 100 assemblage. Dans cette position d'installation, le mors 105 de l'organe 102 de serrage et le mors 109 de la cheville 108 d'ancrage sont éloignés l'un de l'autre. Dans cette position d'installation, le dispositif 100 de fixation est conformé pour que :
- le mors 105 de serrage puisse être introduit en translation dans une mortaise 7 d'un panneau 1 de façon à faire déboucher ledit mors 105 de serrage à l'extérieur du panneau 1 et sur la face 30 opposée de celui-ci ;
- le mors 109 d'ancrage et le détrompeur 116 s'étendent à l'extérieur du panneau 1 et sur la face 20 d'accrochage de celui-ci, et pour que ;
- la cheville 108 d'ancrage et l'organe 102 de serrage solidaire en rotation de la cheville 108 d'ancrage puissent subir une rotation de façon que le passage du mors 105 de serrage dans la mortaise 7 du panneau 1 soit empêché, ledit mors 105 de serrage restant bloqué sur la face 30 opposée du panneau et qu'un alignement du détrompeur 116 avec la mortaise 7 soit obtenu.

Le relâchement de l'effort en compression exercé sur l'organe 102 de serrage permet un rappel élastique et un rapprochement du mors 105 de serrage et du mors 109 d'ancrage et la fixation du dispositif 100 de fixation par serrage sur le panneau.

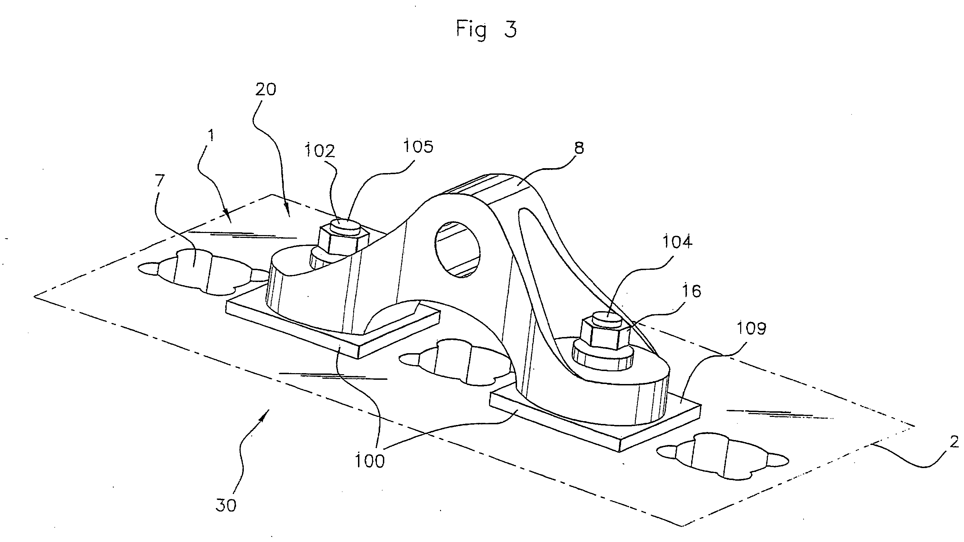

Un dispositif 100 de fixation d'un organe 8 de fixation sur un panneau 1 est représenté en figure 3. Le panneau 1 présente une face 20 supérieure ou accessible et une face 30 aveugle ou opposée. Un tel panneau présente une pluralité de mortaises 7 traversant ledit panneau 1 et débouchant sur chacune des deux faces 20 supérieure et 30 opposée. Les mortaises 7 de la pluralité de mortaises sont alignées sur les deux faces principales du panneau 1. Cette variante d'un panneau 1 équipé de deux dispositifs 100 de fixation selon l'invention représentée en figure 3 permet la fixation d'une chape 8 de fixation d'un siège d'aéronef. La chape 8 de fixation s'étend en regard de deux mortaises 7 abritant deux dispositifs 100 de fixation selon l'invention. Chaque dispositif 100 de fixation présente un mors 109 d'ancrage s'étendant en contact du panneau 1 et en contact avec la chape 8 de fixation. Chaque dispositif 100 de fixation présente aussi un organe 102 de serrage présentant une tige 103 cylindrique dont l'extrémité débouchant sur la face 20 supérieure du panneau 1 présente des moyens 104 de solidarisation de l'organe 102 de serrage avec la chape 8, lesdits moyens 104 de solidarisation étant formés d'une tige 104 filetée et d'un écrou 16 complémentaire.

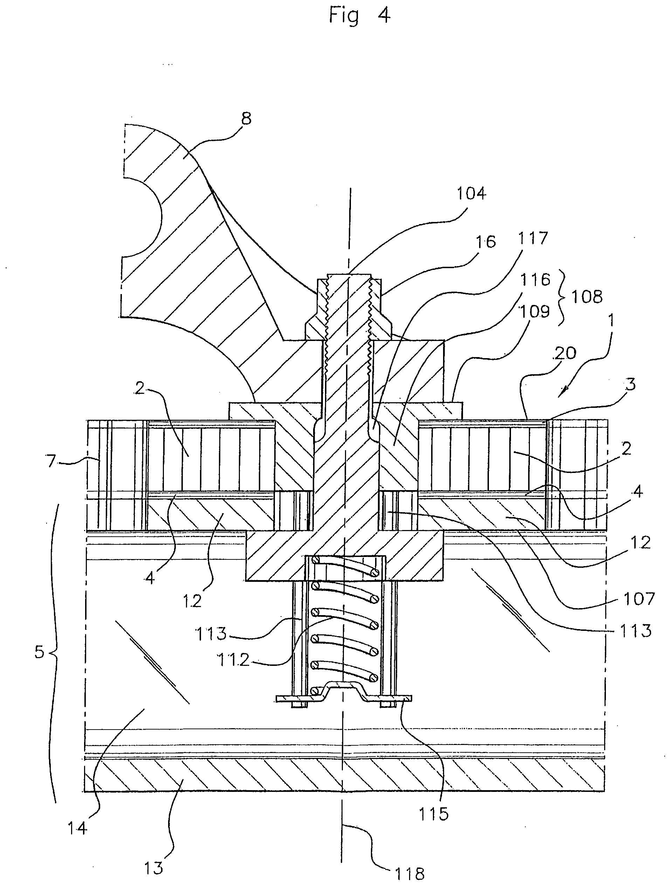

Un dispositif 100 de fixation en position de blocage d'une chape 8 de fixation sur un panneau 1 est représenté en coupe longitudinale en figure 4. Le panneau 1 comprend un plateau 2 autoportant et une poutre 5 de raidissement dudit plateau 2 autoportant. Le panneau 1 présente des mortaises 7 traversant le plateau 2 autoportant et la paroi 12 adhérente de la poutre 5 creuse. Ladite poutre 5 creuse présente en coupe longitudinale une paroi 13 libre, les parois 13 adhérente et 13 libre délimitant un espace 14 intérieur de la poutre 5.

Dans cette position de blocage du dispositif 100 de fixation, le détrompeur 116 de la cheville 108 d'ancrage est inséré dans la mortaise 7 du panneau 1, le mors 109 d'ancrage de la cheville 108 d'ancrage s'étendant sur la face 20 d'accrochage du panneau 1 et le mors 105 de serrage de l'organe 102 de serrage est en appui sur la face 30 opposée du panneau 1 par les lobes 120 du mors 105 de serrage quadrilobé. Dans cette position de blocage, le mors 105 d'ancrage s'étend en appui sur la face 20 d'accrochage et accessible du plateau 2 autoportant et le mors 105 de serrage s'étend au contact et en appui sur la face 107 interne de la paroi 12 adhérente de la poutre 5 par les lobes 120 du mors 105 de serrage quadrilobé. Les moyens 112 élastiques de rappel exercent un effort de serrage du mors 105 de serrage et du mors 109 d'ancrage de façon que le dispositif 100 de fixation soit fixé au panneau 1.

Dans cette position de blocage, l'organe 8 de fixation d'un équipement est fixé au dispositif 100 de fixation au moyen d'un écrou 16 vissé sur l'extrémité 104 de la tige 103 cylindrique de l'organe 102 de serrage. Le serrage de l'écrou 16 sur l'organe 102 de serrage permet un serrage complémentaire du mors 105 de serrage et du mors 109 d'ancrage sur le panneau 1.

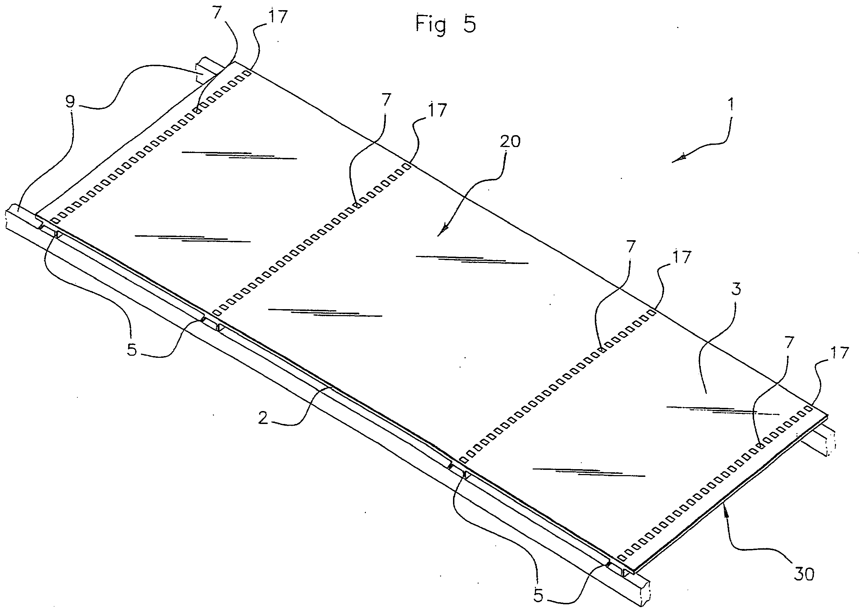

Un panneau 1 monobloc adapté pour pouvoir recevoir un dispositif 100 de fixation selon l'invention est représenté en figure 5. Un tel panneau 1 monobloc est positionné sur deux traverses 9 d'ossature structurelle sensiblement parallèles d'un véhicule de transport et reposant sur celles-ci. Un tel panneau 1 monobloc comprend un plateau 2 autoportant comprenant une âme 2 en nid d'abeille et présentant une face 30 inférieure s'étendant en regard des traverses 9 et une face 20 supérieure opposée à la face inférieure est adaptée pour permettre le cheminement d'utilisateurs et/ou d'usagers du véhicule de transport. L'âme 2 en nid d'abeille est revêtue sur sa face 20 supérieure d'une peau, dite peau 3 de cabine.

Dans un premier mode de réalisation non représenté d'un panneau 1 monobloc selon l'invention, il est possible que l'âme en nid d'abeille présente aussi sur sa face supérieure un revêtement supplémentaire de confort formé d'un tapis, d'une moquette ou de tout autre revêtement adapté pour améliorer le confort - notamment le confort acoustique - de passagers du véhicule de transport.

Un panneau 1 monobloc selon l'invention peut également présenter, sur sa face 30 inférieure, une peau, dite peau 4 inférieure, adaptée pour améliorer la résistance mécanique en flexion du panneau 1 monobloc selon l'une de ses directions principales d'allongement. Cependant, il est possible qu'un panneau 1 monobloc ne présente pas une telle peau 4 inférieure et que les poutres 5 de raidissement s'étendent directement au contact de la face 30 inférieure de l'âme 2 en nid d'abeille.

De tels poutres 5 de raidissement sont réalisés solidaires avec l'âme 2 en nid d'abeille, le cas échéant, avec la peau 4 inférieure de ladite âme 2 en nid d'abeille. En tout état de cause, les poutres 5 sont réalisées de façon à être indissociables de l'âme 2 en nid d'abeille sans engendrer la détérioration du panneau 1 monobloc.

La mise en place d'un panneau 1 monobloc dans un véhicule de transport ne nécessite en aucune façon le positionnement préalable de rails adaptés pour le maintien dudit panneau 1 monobloc et pour le guidage des sièges et/ou meubles équipant la cabine du véhicule de transport.

Un panneau 1 monobloc présente en outre des mortaises 7 traversantes et adaptées pour pouvoir coopérer avec un élément 8 de fixation d'un siège et/ou d'un meuble et pour solidariser cet élément 8 de fixation avec la face 20 supérieure du panneau 1 monobloc. Avantageusement, les mortaises 7 sont réparties dans le plan du panneau 1 monobloc de façon à former des alignements 17 de mortaises 7 adaptés pour pouvoir solidariser au moins une rangée de sièges dans le véhicule de transport. Chaque alignement 17 de mortaises 7 s'étend préférentiellement en regard d'une poutre 5. Dans cette configuration, les efforts liés aux sièges et aux meubles sont repris directement sur les poutres 5.

Ainsi, un panneau 1 monobloc présente une face 20 supérieure qui est parfaitement plane et adaptée pour permettre la circulation d'utilisateurs et/ou de passagers dans le véhicule de transport.

Un tel panneau 1 monobloc permet d'équiper un véhicule de transport avec une pluralité de panneau 1 monobloc selon l'invention, chaque panneau 1 de la pluralité de panneau 1 monobloc présentant des dimensions identiques.

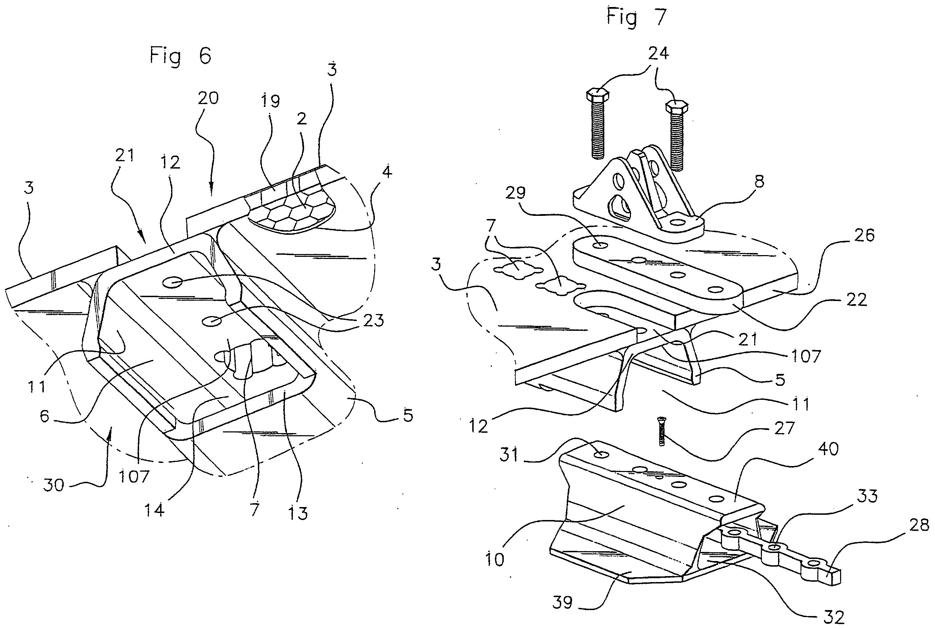

Un détail d'un panneau 1 monobloc vu par-dessous avec un arraché est représenté en figure 6. Le panneau 1 monobloc comprend un plateau 2 autoportant formé d'une âme 2 en nid d'abeille, d'une peau 3 de cabine s'étendant sur et contre la face 20 supérieure de l'âme 2 en nid d'abeille et une peau 4 inférieure s'étendant en surface, au contact et solidaire de la face 30 inférieure de l'âme 2 en nid d'abeille. L'âme 2 en nid d'abeille est d'un type connu en lui-même de l'homme du métier, c'est-à-dire présentant différentes épaisseurs selon les applications souhaitées, différentes formes de ports ou cellules 19 - notamment de section hexagonale - et différents matériaux.

Un tel panneau 1 monobloc présente une poutre 5 solidaire du plateau 2 autoportant et s'étendant au contact de la peau 4 inférieure. La poutre 5 présente un tronçon 6 creux à son extrémité longitudinale. Avantageusement, l'a poutre 5 est creux sur la totalité de sa longueur. Le tronçon 6 creux de l'a poutre 5 présente une paroi 12 adhérente à la peau 4 inférieure du panneau 1 monobloc et dont une première face s'étend au contact de la peau 4 inférieure du plateau 2 autoportant et dont la face opposée à ladite première face s'étend en regard d'un espace 14 intérieur de l'a poutre 5. Le tronçon 6 creux de la poutre 5 présente aussi une paroi 13 libre dont une face s'étend en regard de l'espace 14 intérieur. Les parois 12 adhérente et 13 libre définissent l'espace 14 intérieur formant un logement 11 adapté pour recevoir un organe 10 bi-fonctionnel de fixation de deux panneaux 1 monobloc adjacents et de solidarisation avec une traverse 9 du véhicule de transport. Un tel tronçon 6 creux présente au moins une extrémité formée par évidement, découpe de la face 13 libre de la poutre 5.

Le panneau 1 monobloc représenté en figure 6 présente au moins une mortaise 7 adaptée pour recevoir un tenon de fixation d'un organe 8 de fixation d'un siège sur la face 20 supérieure du panneau 1 monobloc ou un dispositif de fixation d'un équipement selon l'invention. Le panneau 1 monobloc présente en outre un évidement 21 adapté pour recevoir une rehausse 22 et pour noyer ladite rehausse 22 dans l'épaisseur du plateau 2 autoportant. Une telle rehausse 22 est adaptée pour pouvoir coopérer avec deux panneaux 1 monobloc adjacents et pour les solidariser avec une traverse 9 du véhicule de transport.

Le panneau 1 monobloc représenté en figure 6 présente en outre deux alésages 23 de fixation de la poutre 5 du panneau 1 monobloc avec l'organe 10 bi-fonctionnel au moyen de vis 24 lorsque l'organe 10 bi-fonctionnel est engagé dans le logement 11 de la poutre 5.

Un détail d'un panneau 1 monobloc selon une première variante de l'invention, d'un organe 10 bi-fonctionnel de fixation de deux panneaux 1 monobloc adjacents et d'un organe 8 de fixation d'un siège ou d'un meuble vu par-dessus et en éclaté est représenté en figure 7. Dans cette première variante, le panneau 1 monobloc comprend une peau 3 de cabine s'étendant sur et contre la face 20 supérieure du plateau 2 autoportant, une peau 4 inférieure s'étendant sous la face 30 inférieure du plateau 2 autoportant et une poutre 5. Le panneau 1 monobloc présente un évidement 21 adapté pour pouvoir recevoir l'une des extrémités d'une rehausse 22, ladite rehausse 22 présentant deux alésages 29 complémentaires des deux alésages 23 de la poutre 5. Le tronçon 6 creux s'étendant à l'extrémité de la poutre 5 du panneau 1 monobloc est conformé pour présenter un logement 11 apte à coopérer avec l'organe 10 bi-fonctionnel formant un sabot 10.

Un tel sabot 10 présente une semelle 39 adaptée pour pouvoir reposer sur une traverse 9 du véhicule de transport et pour pouvoir être solidarisé avec cette traverse 9. Le sabot 10 comprend en outre une partie 40 en saillie conformée pour pouvoir coopérer avec le logement 11 de la poutre 5 et pour pouvoir limiter, voire empêcher, les mouvements transversaux et/ou longitudinaux du panneau 1 monobloc par rapport au sabot 10 et aux traverses 9. Pour ce faire, la partie 40 en saillie présente des alésages 31 de fixation adaptée pour recevoir les vis 24. Le sabot 10 représenté en figure 7 est équipé d'une contre plaque 28 taraudée s'étendant à l'intérieur lumière 32 du sabot 10, ladite plaque 28 taraudée formant une pluralité d'écrous 33 étant conformée pour présenter un écrou 33 en regard de chaque alésage 31 de fixation du sabot 10. En particulier, le sabot 10 présente une vis 27 de pré-positionnement de la contre plaque 28 taraudée à l'intérieur de la lumière 32 du sabot 10. Ainsi, chaque écrou 33 de la contre plaque 28 taraudée est positionné de façon à pouvoir recevoir la vis 24 de fixation de l'organe 8 de fixation formant un étrier 8, de la rehausse 22, du panneau 1 monobloc et de l'organe 10 bi-fonctionnel formant sabot.

Le panneau 1 monobloc, la rehausse 22 et, le cas échéant, l'organe 8 de fixation sont solidarisés, lorsque le panneau 1 monobloc est positionné et forme le plancher d'un véhicule de transport, avec l'organe 10 bi-fonctionnel au moyen des vis 24 traversant le panneau 1 monobloc, la rehausse 22 et, le cas échéant, l'organe 8 de fixation.

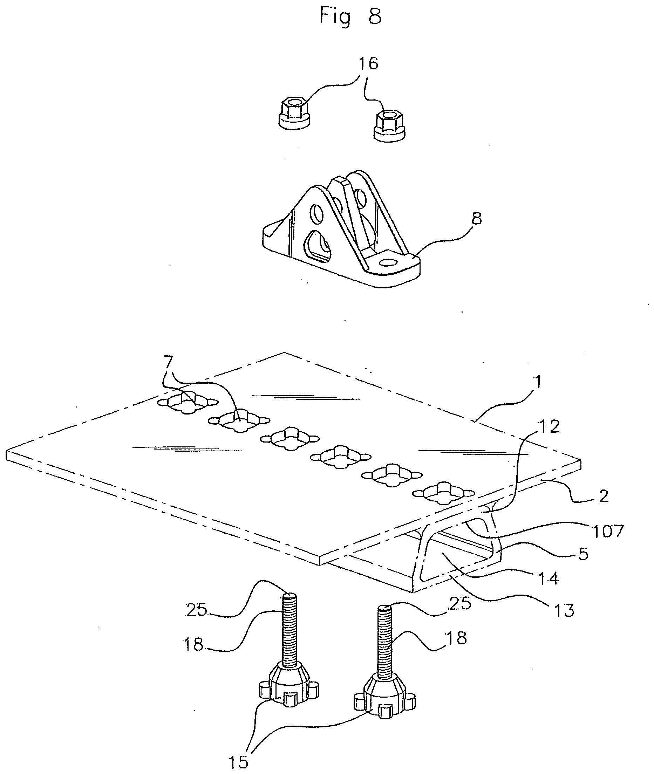

Une deuxième variante d'un panneau 1 monobloc selon l'invention équipé d'un organe 8 de fixation est représentée en figure 8. Dans cette deuxième variante, le panneau 1 monobloc présente une pluralité de mortaises 7 s'étendant à l'aplomb d'une poutre 5 du panneau 1 monobloc, lesdites mortaises 7 étant adaptées pour pouvoir recevoir et solidariser des tenons 15 de fixation de siège et/ou de meuble. Les mortaises 7 et les tenons 15 de fixation sont conformés l'un et l'autre pour que dans une première position relative des mortaises 7 et des tenons 15 de fixation, les tenons 15 de fixation puissent être engagés à l'intérieur des mortaises 7 et pour que dans une deuxième position relative des mortaises 7 et des tenons 15 de fixation ceux-ci soient retenus dans les mortaises 7 et qu'un organe 8 de fixation puisse être solidarisé avec le panneau 1 monobloc au moyen des tenons 15 de fixation et d'écrous 16 adaptés pour pouvoir être engagés à l'extrémité 25 d'une tige 18 filetée des tenons 15 de fixation.

Bien entendu, cette description est donnée à titre d'exemple illustratif uniquement et l'homme du métier pourra y apporter de nombreuses modifications, variantes et applications sans sortir de la portée de l'invention, comme par exemple faire varier le nombre des poutres et/ou les dimensions du plateau autoportant et/ou l'application à d'autres véhicules de transport.

## Revendications

1. Ensemble de panneau (1) et de dispositif (100) de fixation d'un équipement sur une face, dite face (20) d'accrochage principale du panneau (1), comprenant au moins une mortaise (7) traversant le panneau (1) et débouchant sur ladite face (20) d'accrochage et sur une face, dite face (30) opposée principale s'étendant à l'opposé de la face (20) d'accrochage,
le dispositif (100) de fixation présentant un axe (118) longitudinal et l'ensemble étant **caractérisé en ce qu'**il comprend :
- un organe (102) de serrage comprenant un mors, dit mors (105) de serrage, conformé pour pouvoir traverser la mortaise (7) en translation selon l'axe longitudinal (118) et pour pouvoir prendre appui sur la face (30) opposée après rotation selon l'axe longitudinal (118), et comprenant une tige cylindrique (103) présentant des moyens (104) d'accrochage de l'équipement (101) sur la face (20) d'accrochage, et ;
- une cheville (108) d'ancrage du dispositif (100) de fixation dans le panneau (1), solidaire en rotation de l'organe (102) de serrage selon l'axe (118) longitudinal du dispositif (100) de fixation et comprenant un mors, dit mors (109) d'ancrage, adapté pour pouvoir prendre appui sur la face (20) d'accrochage, et un détrompeur (116) de guidage de la cheville (108) d'ancrage dans la mortaise (7), solidaire en rotation du mors (109) d'ancrage et en regard du mors (105) de serrage, ledit détrompeur (116) présentant une lumière (117) prolongeant co-axialement le mors d'ancrage (109) et adaptée pour recevoir la tige (103) de l'organe (102) de serrage, et une enveloppe externe conformée pour coopérer avec la surface interne de la mortaise (7) du panneau pour bloquer en rotation le dispositif de fixation (100) dans ladite mortaise (7);
ledit organe (102) de serrage étant adapté pour pouvoir être déplacé en translation par rapport à la cheville (108) d'ancrage selon l'axe (118) longitudinal entre :
▪ une position, dite position de blocage du dispositif (100) de fixation dans laquelle le mors (105) de serrage et le mors (109) d'ancrage sont rapprochés l'un de l'autre par des moyens (112) élastiques de rappel et au contact des deux faces principales du panneau (1), et
▪ une position, dite position d'installation, du dispositif (100) de fixation dans laquelle le mors (105) de serrage et le mors (109) d'ancrage sont éloignés l'un de l'autre par rapport à la position de blocage de façon à permettre une rotation du mors de serrage (105) du dispositif (100) de fixation selon l'axe (118) longitudinal.

2. Ensemble selon la revendication 1, **caractérisé en ce que** la tige (103) cylindrique traversant un alésage du mors (109) d'ancrage présente une première extrémité (104) longitudinale s'étendant en saillie de la cheville (108) d'ancrage au moins dans la position de blocage du dispositif (100) de fixation, ladite première extrémité (104) longitudinale étant adaptée pour permettre la fixation dudit équipement (101) sur le panneau (1), le mors (105) de serrage étant solidaire de la tige (103) cylindrique et s'étendant à une deuxième extrémité (106) longitudinale de la tige (103) cylindrique.

3. Ensemble selon l'une des revendication 1 ou 2, **caractérisé en ce que** l'alésage du mors (109) d'ancrage est adapté pour recevoir la tige (103) cylindrique de l'organe (102) de serrage et pour permettre un déplacement de ladite tige (103) cylindrique en translation dans l'alésage du mors (109) d'ancrage entre la position de blocage et la position d'installation du dispositif (100) de fixation.

4. Ensemble selon l'une des revendications 1 à 3, **caractérisé en ce que** la cheville (108) d'ancrage comprend des moyens (113) de guidage du mors (105) de serrage en translation entre la position de blocage et la position d'installation du dispositif (100) de fixation.

5. Ensemble selon la revendication 4, **caractérisé en ce que** les moyens (113) de guidage comprennent des tiges (113) de guidage s'étendant entre le mors (105) de serrage et un support (114) de la cheville (108) d'ancrage.

6. Dispositif selon la revendication 5, **caractérisé en ce que** les moyens (112) élastiques comprennent au moins un ressort (112) de compression s'étendant entre le support (114) de la cheville (108) d'ancrage et le mors (105) de serrage de l'organe (102) de serrage.

7. Ensemble selon l'une des revendications 2 à 6, **caractérisé en ce que** le détrompeur (116) est adapté pour permettre un déplacement de ladite tige (103) cylindrique entre la position de blocage et la position d'installation du dispositif (100) de fixation.

8. Ensemble selon la revendication 7, **caractérisé en ce que** le mors (109) d'ancrage est formé d'une plaque, dite plaque (115) d'ancrage, d'appui sur la face (20) d'accrochage du panneau (1) lorsque le dispositif (100) de fixation est en position de blocage et **en ce que** le détrompeur (116) est de forme cylindrique et présente en section droite perpendiculaire à l'axe (118) longitudinal du dispositif (100) de fixation le contour extérieur inscrit dans *la* mortaise (7) du panneau (1).

9. Ensemble selon l'une des revendications 7 ou 8, **caractérisé en ce que** le détrompeur (116) coopère en déplacement dans la mortaise (7) perpendiculairement aux faces principales du panneau (1) et bloque le dispositif (100) de fixation en rotation par rapport au panneau (1) selon un axe perpendiculaire aux faces principales du panneau (1).

10. Ensemble selon l'une des revendications 1 à 9, **caractérisé en ce que** la première extrémité (104) longitudinale de la tige (103) cylindrique est une tige (104) filetée.

11. Ensemble selon l'une des revendications 7 à 10, **caractérisé en ce que** le mors (105) de serrage et le détrompeur (116) présentent en section droite transversale par rapport à l'axe (118) d'allongement du dispositif (100) de fixation et sensiblement parallèle à un axe perpendiculaire aux deux faces principales du panneau (1) un contour extérieur identique.

12. Ensemble selon l'une des revendications 7 à 11, **caractérisé en ce que** le mors (105) de serrage et le détrompeur (116) présentent en section droite transversale un contour extérieur quadrilobé.

13. Ensemble selon l'une des revendications 11 ou 12 en combinaison avec la revendication 2, **caractérisé en ce que** le mors (105) de serrage et le détrompeur (116) présentent en projection sur un plan orthogonal à l'axe longitudinal de la tige (103) cylindrique de leur section droite transversale un contour se déduisant l'un de l'autre par rotation d'un angle de valeur non nulle.

14. Plancher de véhicule de transport comportant un dispositif de fixation d'un équipement selon l'une des revendications 1 à 13 et un panneau sur lequel l'équipement est fixé par ce dispositif, **caractérisé en ce que** le panneau (1) comprend un plateau (2) autoportant présentant une première face principale, dite face (20) supérieure, du plateau (2) autoportant adaptée pour pouvoir permettre la circulation d'un utilisateur sur le plancher dudit véhicule de transport.

15. Plancher de véhicule de transport selon la revendication précédente, **caractérisé en ce que** le panneau (1) est un panneau (1) monobloc comprenant au moins une poutre (5) d'augmentation de la résistance en flexion du panneau (1) monobloc selon un axe principal dudit panneau (1) monobloc, chaque poutre (5) étant solidaire du plateau (2) autoportant et présentant un axe d'allongement s'étendant parallèlement à au moins l'une des faces principales du plateau (2) autoportant.

16. Procédé de fixation d'un équipement (101) sur un panneau (1) comprenant deux faces principales et au moins une mortaise (7) traversant ledit panneau (1) et débouchant sur les deux faces principales dudit panneau (1), dans lequel on utilise un ensemble de panneau (1) et de dispositif (100) de fixation selon l'une des revendications 1 à 15 d'abord en position de blocage puis, après translation et rotation selon l'axe longitudinal (118), en position d'installation.

17. Procédé selon la revendication 16, **caractérisé en ce que** :
- on exerce un effort sur le dispositif (100) de fixation de façon à placer ledit dispositif (100) de fixation dans sa position d'installation dans laquelle le mors (105) de serrage et le mors (109) d'ancrage sont éloignés par rapport à la position de blocage et dans laquelle le mors (105) de serrage est conformé de façon à pouvoir traverser la mortaise (7) du panneau (1), puis ;
- on introduit ledit dispositif (100) de fixation dans sa position d'installation dans l'une des mortaises (7) du panneau (1) de façon que le mors (105) de serrage s'étende en regard de la face (30) opposée du panneau (1), que le mors (109) d'ancrage s'étende en regard de la face (20) d'accrochage du panneau (1), puis ;
- on réalise une rotation du dispositif (100) de fixation selon son axe (118) longitudinal, puis ;
- on relâche l'effort de façon que le mors (105) de serrage et le mors (109) d'ancrage soient rappelés élastiquement en rapprochement l'un par rapport à l'autre par des moyens (112) élastiques et que le panneau (1) et le dispositif (100) de fixation soient assemblés, et ;
- on assemble l'organe (102) de serrage avec l'équipement (101) par des moyens (104) de fixation.

## Patentansprüche

1. Anordnung aus einem Paneel (1) und einer Befestigungsvorrichtung (100) zur Befestigung eines Ausrüstungsgegenstands auf einer Seite des Paneels (1), Hauptanbringseite (20) genannt, umfassend mindestens ein Loch (7), welches das Paneel (1) durchdringt und an der Anbringseite (20) und an einer Seite, entgegengesetzte Hauptseite (30) genannt, die sich entgegengesetzt zur Anbringseite (20) erstreckt, mündet,
wobei die Befestigungsvorrichtung (100) eine Längsachse (118) aufweist und die Anordnung **dadurch gekennzeichnet ist, dass** sie umfasst:
- ein Klemmorgan (102), umfassend eine Backe, Klemmbacke (105) genannt, die dazu ausgebildet ist, das Loch (7) translatorisch entlang der Längsachse (118) durchdringen zu können und nach dem Drehen entlang der Längsachse (118) an der entgegengesetzten Seite (30) anliegen zu können, und umfassend einen zylindrischen Stift (103), der Mittel (104) zum Anbringen des Ausrüstungsgegenstands (101) an der Anbringseite (20) aufweist, und;
- einen Verankerungsdübel (108) zur Verankerung der Befestigungsvorrichtung (100) in dem Paneel (1), der drehfest entlang der Längsachse (118) der Befestigungsvorrichtung (100) mit dem Klemmorgan (102) verbunden ist und der eine Backe, Verankerungsbacke (109) genannt, die geeignet ist, an der Anbringseite (20) anliegen zu können, und eine Fehlstecksicherung (116) zur Führung des Verankerungsdübels (108) im Loch (7), die drehfest mit der Verankerungsbacke (109) verbunden und gegenüber der Klemmbacke (105) ist, wobei die Fehlstecksicherung (116) einen Schlitz (117) aufweist, der die Verankerungsbacke (109) koaxial verlängert und geeignet ist, den Stift (103) des Klemmorgans (102) aufzunehmen, und eine äußere Hülle, die dazu ausgebildet ist, mit der Innenoberfläche des Lochs (7) der Platte zusammenzuwirken, um die Befestigungsvorrichtung (100) in dem Loch (7) gegen Verdrehen zu sichern, umfasst;
wobei das Klemmorgan (102) geeignet ist, in Bezug auf den Verankerungsdübel (108) entlang der Längsachse (118) translatorisch bewegt zu werden zwischen:
▪ einer Stellung der Befestigungsvorrichtung (100), Blockierstellung genannt, in der die Klemmbacke (105) und die Verankerungsbacke (109) durch elastische Rückstellmittel (112) aneinander herangeführt sind und mit den beiden Hauptseiten des Paneels (1) in Kontakt sind, und
▪ einer Stellung der Befestigungsvorrichtung (100), Einbaustellung genannt, in der die Klemmbacke (105) und die Verankerungsbacke (109) in Bezug auf die Blockierstellung voneinander entfernt sind, um ein Drehen der Klemmbacke (105) der Befestigungsvorrichtung (100) entlang der Längsachse (118) zu ermöglichen.

2. Anordnung nach Anspruch 1, **dadurch gekennzeichnet, dass** der zylindrische Stift (103), der eine Bohrung der Verankerungsbacke (109) durchdringt, ein erstes Längsende (104) aufweist, das sich zumindest in der Blockierstellung der Befestigungsvorrichtung (100) aus dem Verankerungsdübel (108) herausragend erstreckt, wobei das erste Längsende (104) dazu geeignet ist, die Befestigung des Ausrüstungsgegenstands (101) am Paneel (1) zu ermöglichen, wobei die Klemmbacke (105) mit dem zylindrischen Stift (103) fest verbunden ist und sich an einem zweiten Längsende (106) des zylindrischen Stifts (103) erstreckt.

3. Anordnung nach einem der Ansprüche 1 oder 2, **dadurch gekennzeichnet, dass** die Bohrung der Verankerungsbacke (109) dazu geeignet ist, den zylindrischen Stift (103) des Klemmorgans (102) aufzunehmen und eine translatorische Bewegung des zylindrischen Stifts (103) in der Bohrung der Verankerungsbacke (109) zwischen der Blockierstellung und der Einbaustellung der Befestigungsvorrichtung (100) zu ermöglichen.

4. Anordnung nach einem der Ansprüche 1 bis 3, **dadurch gekennzeichnet, dass** der Verankerungsdübel (108) Führungsmittel (113) zum translatorischen Führen der Klemmbacke (105) zwischen der Blockierstellung und der Einbaustellung der Befestigungsvorrichtung (100) umfasst.

5. Anordnung nach Anspruch 4, **dadurch gekennzeichnet, dass** die Führungsmittel (113) Führungsstifte (113) umfassen, die sich zwischen der Klemmbacke (105) und einem Träger (114) des Verankerungsdübels (108) erstrecken.

6. Vorrichtung nach Anspruch 5, **dadurch gekennzeichnet, dass** die elastischen Mittel (112) mindestens eine Druckfeder (112) umfassen, die sich zwischen dem Träger (114) des Verankerungsdübels (108) und der Klemmbacke (105) des Klemmorgans (102) erstreckt.

7. Anordnung nach einem der Ansprüche 2 bis 6, **dadurch gekennzeichnet, dass** die Fehlstecksicherung (116) geeignet ist, ein Bewegen des zylindrischen Stiftes (103) zwischen der Blockierstellung und der Einbaustellung der Befestigungsvorrichtung (100) zu ermöglichen.

8. Anordnung nach Anspruch 7, **dadurch gekennzeichnet, dass** die Verankerungsbacke (109) aus einer Platte, Verankerungsplatte (115) genannt, zur Anlage an der Anbringseite (20) des Paneels (1), wenn die Befestigungsvorrichtung (100) in der Blockierstellung ist, gebildet ist und dass die Fehlstecksicherung (116) zylindrisch geformt ist und im Querschnitt senkrecht zur Längsachse (118) der Befestigungsvorrichtung (100) die Außenkontur aufweist, die in das Loch (7) des Paneels (1) passt.

9. Anordnung nach einem der Ansprüche 7 oder 8, **dadurch gekennzeichnet, dass** die Fehlstecksicherung (116) bei der Bewegung im Loch (7) senkrecht zu den Hauptseiten des Paneels (1) kooperiert und die Befestigungsvorrichtung (100) in Bezug auf das Paneel (1) entlang einer senkrecht zu den Hauptseiten des Paneels (1) verlaufenden Achse gegen Verdrehen sichert.

10. Anordnung nach einem der Ansprüche 1 bis 9, **dadurch gekennzeichnet, dass** das erste Längsende (104) des zylindrischen Stifts (103) ein Gewindestift (104) ist.

11. Anordnung nach einem der Ansprüche 7 bis 10, **dadurch gekennzeichnet, dass** die Klemmbacke (105) und die Fehlstecksicherung (116) im geraden Querschnitt in Bezug auf die Längsachse (118) der Befestigungsvorrichtung (100) und im Wesentlichen parallel zu einer senkrecht zu den beiden Hauptseiten des Paneels (1) verlaufenden Achse eine identische Außenkontur aufweisen.

12. Anordnung nach einem der Ansprüche 7 bis 11, **dadurch gekennzeichnet, dass** die Klemmbacke (105) und die Fehlstecksicherung (116) im geraden Querschnitt eine kleeblattförmige Außenkontur aufweisen.

13. Anordnung nach einem der Ansprüche 11 oder 12 in Kombination mit Anspruch 2, **dadurch gekennzeichnet, dass** die Klemmbacke (105) und die Fehlstecksicherung (116) in der Projektion ihres geraden Querschnitts auf eine Ebene senkrecht zur Längsachse des zylindrischen Stifts (103) eine Kontur aufweisen, die sich durch Drehen um einen Winkel mit einem Wert ungleich Null voneinander ergibt.

14. Transportfahrzeugboden mit einer Befestigungsvorrichtung für einen Ausrüstungsgegenstand nach einem der Ansprüche 1 bis 13 und einem Paneel, auf dem der Ausrüstungsgegenstand durch diese Vorrichtung befestigt wird, **dadurch gekennzeichnet, dass** das Paneel (1) eine selbsttragende Platte (2) umfasst, die eine erste Hauptseite, Oberseite (20) genannt, der selbsttragenden Platte (2) aufweist, die dazu geeignet ist, das Gehen eines Benutzers auf dem Boden des Transportfahrzeugs ermöglichen zu können.

15. Transportfahrzeugboden nach dem vorhergehenden Anspruch, **dadurch gekennzeichnet, dass** das Paneel (1) ein einstückiges Paneel (1) ist, das mindestens einen Träger (5) zur Erhöhung der Biegefestigkeit des einstückigen Paneels (1) entlang einer Hauptachse des einstückigen Paneels (1) umfasst, wobei jeder Träger (5) mit der selbsttragenden Platte (2) fest verbunden ist und eine Längsachse aufweist, die sich parallel zu mindestens einer der Hauptseiten der selbsttragenden Platte (2) erstreckt.

16. Verfahren zum Befestigen eines Ausrüstungsgegenstands (101) auf einem Paneel (1), das zwei Hauptseiten und mindestens ein Loch (7) umfasst, welches das Paneel (1) durchdringt und an den beiden Hauptseiten des Paneels (1) mündet, wobei eine Anordnung aus einem Paneel (1) und einer Befestigungsvorrichtung (100) nach einem der Ansprüche 1 bis 15 zunächst in der Blockierstellung, dann, nach Translation und Drehung entlang der Längsachse (118), in der Einbaustellung verwendet wird.

17. Verfahren nach Anspruch 16, **dadurch gekennzeichnet, dass**:
- man auf die Befestigungsvorrichtung (100) eine Kraft ausübt, so dass die Befestigungsvorrichtung (100) in ihre Einbaustellung gebracht wird, in der die Klemmbacke (105) und die Verankerungsbacke (109) in Bezug auf die Blockierstellung entfernt sind und in der die Klemmbacke (105) so ausgebildet ist, dass sie das Loch (7) des Paneels (1) durchdringen kann, dann;
- man die Befestigungsvorrichtung (100) in ihrer Einbaustellung so in eines der Löcher (7) des Paneels (1) einführt, dass sich die Klemmbacke (105) gegenüber der entgegengesetzten Seite (30) des Paneels (1) erstreckt, dass sich die Verankerungsbacke (109) gegenüber der Anbringseite (20) des Paneels (1) erstreckt, dann;
- man eine Drehung der Befestigungsvorrichtung (100) entlang ihrer Längsachse (118) ausführt, dann;
- man die Kraft nachlässt, so dass die Klemmbacke (105) und die Verankerungsbacke (109) durch elastische Mittel (112) elastisch aneinander herangeführt werden und das Paneel (1) und die Befestigungsvorrichtung (100) montiert sind; und
- man das Klemmorgan (102) mit dem Ausrüstungsgegenstand (101) durch Befestigungsmittel (104) montiert.

## Claims

1. Assembly made up of a panel (1) and a device (100) for fastening a fitting to a face, known as the main attachment face (20) of the panel (1), comprising at least one mortise (7) that passes through the panel (1) and opens out onto said attachment face (20), and to a face, known as the main opposite face (30) that lies on the opposite side from the attachment face (20),
the fastening device (100) having a longitudinal axis (118) and the assembly being **characterized in that** it comprises:
- a clamping member (102) comprising a jaw, known as the clamping jaw (105), which is shaped to be able to pass through the mortise (7) translationally along the longitudinal axis (118) and to be able to bear against the opposite face (30) following rotation about the longitudinal axis (118) and comprising a cylindrical rod (103) having means (104) for attaching the fitting (101) to the attachment face (20); and
- a peg (108) for anchoring the fastening device (100) in the panel (1), said peg (108) rotating as one with the clamping member (102) about the longitudinal axis (118) of the fastening device (100) and comprising a jaw, known as the anchoring jaw (109), which is designed to be able to bear against the attachment face (20), and an error-proofing feature (116) for guiding the anchoring peg (108) into the mortise (7), rotating as one with the anchoring jaw (109) and facing the clamping jaw (105), said error-proofing feature (116) having a hole (117) that coaxially extends the anchoring jaw (109) and is designed to receive the cylindrical rod (103) of the clamping member (102), and an external envelope shaped so as to engage with the internal surface of the mortise (7) in the panel in order to prevent the fastening device (100) from rotating in said mortise (7);
said clamping member (102) being designed to be able to be moved translationally with respect to the anchoring peg (108) along the longitudinal axis (118) between:
- a position, known as the blocking position, of the fastening device (100), in which the clamping jaw (105) and the anchoring jaw (109) have been moved toward one another by elastic return means (112) and are in contact with the two main faces of the panel (1); and
- a position, known as the installation position, of the fastening device (100), in which the clamping jaw (105) and the anchoring jaw (109) have been spaced apart from one another with respect to the blocking position so as to allow the clamping jaw (105) of the fastening device (100) to rotate about the longitudinal axis (118).

2. Assembly according to Claim 1, **characterized in that** the cylindrical rod (103) passing through a bore in the anchoring jaw (109) has a first longitudinal end (104) that protrudes from the anchoring peg (108) at least in the blocking position of the fastening device (100), said first longitudinal end (104) being designed to allow said fitting (101) to be fastened to the panel (1), the clamping jaw (105) being secured to the cylindrical rod (103) and lying at a second longitudinal end (106) of the cylindrical rod (103).

3. Assembly according to either of Claims 1 and 2, **characterized in that** the bore in the anchoring jaw (109) is designed to receive the cylindrical rod (103) of the clamping member (102) and to allow said cylindrical rod (103) to move translationally in the bore in the anchoring jaw (109) between the blocking position and the installation position of the fastening device (100).

4. Assembly according to one of Claims 1 to 3, **characterized in that** the anchoring peg (108) comprises means (113) for guiding the clamping jaw (105) translationally between the blocking position and the installation position of the fastening device (100).

5. Assembly according to Claim 4, **characterized in that** the guiding means (113) comprise guiding rods (113) that extend between the clamping jaw (105) and the holder for the anchoring peg (108).

6. Device according to Claim 5, **characterized in that** the elastic means (112) comprise at least one compression spring (112) that extends between the holder for the anchoring peg (108) and the clamping jaw (105) of the clamping member (102).

7. Assembly according to one of Claims 2 to 6, **characterized in that** the error proofing feature (116) is designed to allow said cylindrical rod (103) to move between the blocking position and the installation position of the fastening device (100).

8. Assembly according to Claim 7, **characterized in that** the anchoring jaw (109) is formed by a plate, known as the anchoring plate (115), for bearing against the attachment face (20) of the panel (1) when the fastening device (100) is in the blocking position, and **in that** the error-proofing feature (116) has a cylindrical shape and, in cross section perpendicular to the longitudinal axis (118) of the fastening device (100), has the external contour inscribed in the mortise (7) in the panel (1).

9. Assembly according to either of Claims 7 and 8, **characterized in that** the error-proofing feature (116) engages in movement in the mortise (7) perpendicularly to the main faces of the panel (1) and prevents the fastening device (100) from rotating with respect to the panel (1) about an axis perpendicular to the main faces of the panel (1).

10. Assembly according to one of Claims 1 to 9, **characterized in that** the first longitudinal end (104) of the cylindrical rod (103) is a threaded rod (104).

11. Assembly according to one of Claims 7 to 10, **characterized in that** the clamping jaw (104) and the error-proofing feature (116) have an identical external contour in cross section with respect to the axis (118) of elongation of the fastening device (100) and approximately parallel to an axis perpendicular to the two main faces of the panel (1).

12. Assembly according to one of Claims 7 to 11, **characterized in that** the clamping jaw (105) and the error-proofing feature (116) have a quatrefoil external contour in cross section.

13. Assembly according to either of Claims 11 and 12 in combination with Claim 2, **characterized in that** the clamping jaw (105) and the error-proofing feature (116) have contours that differ from one another by rotation through a non-zero angle when their cross sections are projected on a plane at right angles to the longitudinal axis of the cylindrical rod (103).

14. Transport vehicle floor having a device for fastening a fitting according to one of Claims 1 to 13 and a panel to which the fitting is fastened by this device, **characterized in that** the panel (1) comprises a self-supporting board (2) having a first main face, known as the upper face (20) of the self-supporting board (2) that is designed to be able to allow a user to move around on the floor of said transport vehicle.

15. Transport vehicle floor according to the preceding claim, **characterized in that** the panel (1) is a one-piece panel (1) comprising at least one beam (5) for increasing the bending strength of the one-piece panel (1) along a main axis of said one-piece panel (1), each beam (5) being secured to the self-supporting board (2) and having an axis of elongation that extends parallel to at least one of the main faces of the self-supporting board (2).

16. Method for fastening a fitting (101) to a panel (1) comprising two main faces and at least one mortise (7) passing through said panel (1) and opening out onto the two main faces of said panel (1), wherein use is made of an assembly made up of a panel (1) and a fastening device (100) according to one of Claims 1 to 15 firstly in the blocking position and then, following translational movement along and rotation about the longitudinal axis (118), in the installation position.

17. Method according to Claim 16, **characterized in that**:
- a force is exerted on the fastening device (100) so as to place said fastening device (100) in its installation position, in which the clamping jaw (105) and the anchoring jaw (109) are spaced apart with respect to the blocking position and in which the clamping jaw (105) is shaped so as to be able to pass through the mortise (7) in the panel (1); then
- said fastening device (100) is introduced in its installation position into one of the mortises (7) in the panel (1) such that the clamping jaw (105) lies next to the opposite face (30) of the panel (1), and such that the anchoring jaw (109) lies next to the attachment face (20) of the panel (1); then
- the fastening device (100) is rotated about its longitudinal axis (118); then
- the force is released such that the clamping jaw (105) and the anchoring jaw (109) are returned elastically toward one another by elastic means (112), and such that the panel (1) and the fastening device (100) are assembled; and
- the clamping member (102) is assembled with the fitting (101) by fastening means (104).
